## Europäisches Patentamt
## European Patent Office
## Office européen des brevets

(11) Numéro de publication : **0 197 232 B1**

# FASCICULE DE BREVET EUROPÉEN

(45) Date de publication du fascicule du brevet :
28.06.89

(21) Numéro de dépôt : 85810159.5

(22) Date de dépôt : 11.04.85

(51) Int. Cl.⁴ : **F 16 K 31/06**

(54) **Valve à commande électromagnétique pulsée.**

(43) Date de publication de la demande :
15.10.86 Bulletin 86/42

(45) Mention de la délivrance du brevet :
28.06.89 Bulletin 89/26

(84) Etats contractants désignés :
CH DE FR GB IT LI NL SE

(56) Documents cités :
EP—A— 0 135 474
CH—A— 264 710
US—A— 2 860 850
US—A— 4 005 733

(73) Titulaire : **HONEYWELL LUCIFER SA**
**16, chemin du Faubourg-de-Cruseilles**
**CH-1227 Carouge (Genève) (CH)**

(72) Inventeur : **Livet, Jean**
**Chemin Moise-Duboule 23**
**CH-1209 Genève (CH)**

(74) Mandataire : **Ardin, Pierre et al**
**PIERRE ARDIN & CIE 22, rue du Mont-Blanc Case postale 60**
**CH-1211 Genève 1 (CH)**

## Description

On connaît déjà des valves à commande électromagnétique pulsée, comprenant un corps délimitant une chambre dans laquelle un noyau mobile formant obturateur peut être déplacé sous l'action d'un champ magnétique produit par un enroulement électrique, cet organe obturateur coopérant avec au moins un siège pour contrôler le passage d'un fluide entre ladite chambre et un orifice de raccordement, ledit siège étant constitué par une rondelle non-magnétique. Une valve de ce type est décrite par exemple dans le brevet suisse n° 264 710.

Les valves de ce genre sont généralement utilisées pour obtenir un réglage de débit, ce réglage étant obtenu en envoyant des impulsions pour ouvrir la valve et respectivement la fermer, le rapport des temps d'ouverture et de fermeture et/ou la fréquence étant choisi pour obtenir le débit désiré.

Pour atteindre une bonne précision de réglage, il est indispensable que la course de l'organe obturateur soit définie avec une précision, de l'ordre de quelques microns. De plus, la valeur de cette course ne doit pas se modifier pendant un nombre de cycles très élevé, de l'ordre de $10^9$ à $10^{10}$.

L'invention a pour but d'améliorer la précision et la fiabilité des valves du genre décrit, par des éléments simples à fabriquer et faciles à monter, tout en respectant les exigences précitées.

A cet effet, la valve faisant l'objet de l'invention est caractérisée en ce que la rondelle non-magnétique a une dureté supérieure à celle d'un support contre lequel elle est apliquée axialement par un épaulement d'un élément soumis à l'action d'un ressort et dont une extrémité est engagée dans un trou correspondant d'une partie fixe de la valve.

Le dessin annexé représente schématiquement et, à titre d'exemple, une forme d'exécution et deux variantes de la valve, objet de l'invention.

La figure 1 est une coupe axiale de la forme d'exécution.

La figure 2 est une coupe semblable de la première variante.

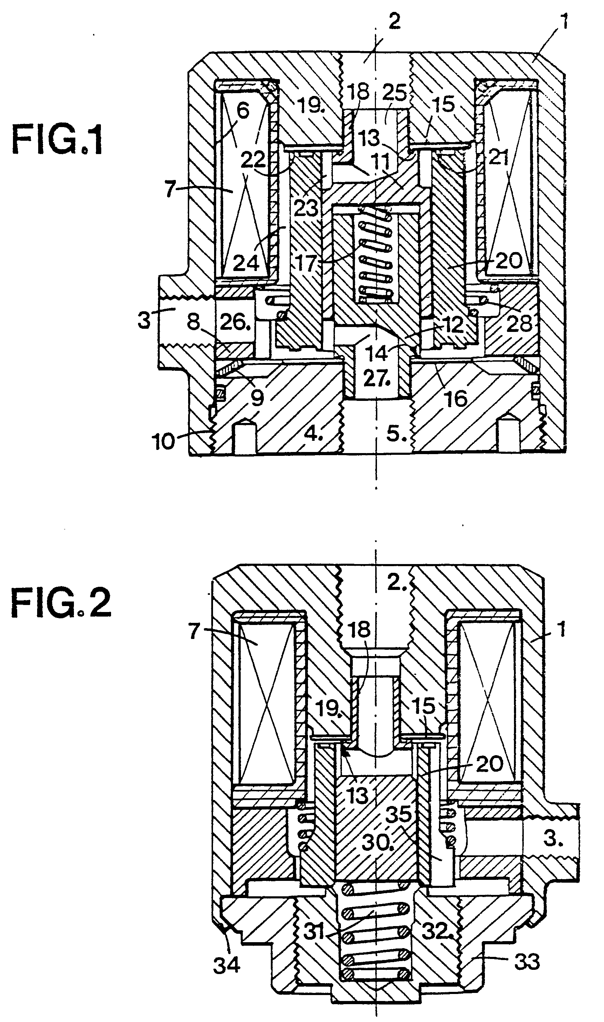

La valve selon la figure 1 est une valve à trois voies à commande électromagnétique pulsée. Elle comprend un corps 1 en matière ferromagnétique, présentant deux orifices de raccordement 2 et 3. Le corps 1 est fermé à sa partie inférieure par un bouchon 4 présentant un troisième orifice de raccordement 5. Le corps 1 présente un logement 6 dans lequel est disposée une bobine électrique 7 qui est poussée vers le haut par une pièce annulaire 8 ferromagnétique, soumise à l'action d'un ressort 9 constitué par une rondelle conique. Ce ressort 9 prend appui contre le bouchon 4, dont la position axiale peut être réglée par vissage grâce au filetage 10.

Deux éléments 11 et 12, engagés télescopiquement l'un dans l'autre, présentent des épaulements 13 et 14 destinés à prendre appui contre des plaquettes 15 et 16 sous l'action d'un ressort 17 logé à l'intérieur des éléments 11 et 12. La plaquette 15 est constituée par une rondelle en matière non magnétique, présentant une dureté au moins égale à celle du corps 1 contre lequel elle prend appui vers le haut. Par mesure de simplification, la plaquette 16 est constituée par une rondelle identique à la plaquette 15.

L'élément 11 présente une portion supérieure tubulaire de section circulaire 18, engagée à coulissement dans un alésage prolongeant l'orifice de raccordement 2. Cet alésage est prévu dans une portion polaire 19 du corps 1, cette portion constituant un pôle magnétique de la valve. Ce pôle a pour rôle d'attirer un noyau magnétique 20 qui est monté à coulissement libre sur l'élément 11.

Dans la position attirée qui est représentée à la figure 1, le noyau 20 prend appui de façon étanche contre la plaquette 15 et, à cet effet, il est muni d'une nervure circulaire 21. En position attirée, le noyau 20 coupe la communication entre une chambre annulaire 23, disposée à l'intérieur du noyau 20, et une chambre annulaire extérieure 24, entourant le noyau 20. La chambre annulaire 23 communique avec l'orifice de raccordement 2 par un passage coudé 25, ménagé dans l'élément 11, tandis que la chambre 24 communique avec l'orifice de raccordement 3 par un passage 26 prévu dans la pièce annulaire 8. Lorsque le noyau 20 est en position attirée, la chambre 24 est mise en communication avec l'orifice de raccordement 5 par un passage 27 coudé prévu dans l'élément 12. Cet élément 12 présente aussi une portion tubulaire engagée dans un alésage prolongeant l'orifice de raccordement 5.

En l'absence de courant dans la bobine 7, l'attraction magnétique cesse et le noyau 20 est ramené par un ressort de rappel 28 contre la plaquette 16 pour fermer la communication entre les orifices de raccordement 3 et 5. L'étanchéité contre la plaquette 16 est également obtenue par une nervure circulaire prévue à la base du noyau 20.

Il y a lieu de remarquer que, grâce au fait que le noyau 20 coulisse sur l'élément 11, il est possible de prévoir un jeu important entre la périphérie de ce noyau et le corps des bobines 7, de sorte que la section transversale de la chambre annulaire 24 est relativement grande, ce qui diminue dans une forte mesure la résistance dynamique du fluide s'opposant au déplacement du noyau 20. D'autre part, l'épaisseur de la plaquette 15 en matière non magnétique permet de déterminer avec une grande précision l'entrefer que l'on désire obtenir entre le noyau 20 en position attirée et la portion polaire 19. Cet entrefer évite le collage du noyau 20 contre la portion 19 et permet un rappel rapide sous l'effet du ressort 28. La course du noyau 20 entre ces deux positions de fermeture est réglée par un simple vissage du bouchon 4 dans le corps 1.

A la partie supérieure du noyau 20, la nervure 21 est entourée d'une seconde nervure 22 destinée à faciliter le passage du flux magnétique.

Le montage de la valve décrite est très simple, car tous ses éléments sont introduits par l'orifice du bouchon 4 et sont ensuite retenus dans leur position correcte uniquement par la mise en place du bouchon.

La figure 2 représente une variante simplifiée qui conserve les mêmes principes que la figure 1, dans le cas d'une valve à deux voies à position normalement ouverte. Dans cette variante la fermeture de la communication entre les deux voies est effectuée entre le noyau 20 et la portion polaire 19 munie de la plaquette 15. Les deux éléments 11 et 12 ont été remplacés par une seule pièce 30 avec un prolongement tubulaire engagé dans l'orifice de raccordement 2 et une nervure circulaire 13 pour appliquer la plaquette 15 contre la portion polaire 19. Cette pièce 30 est poussée vers le haut par un ressort 31, disposé dans un logement borgne d'un bouchon 32. Ce dernier est vissé dans une pièce de fermeture 33 qui est sertie dans le corps 1 par un rebord 34. Le passage du fluide entre les orifices de raccordement 2 et 3 est facilité grâce à des rainures longitudinales 35, prévues dans la partie extérieure du noyau 20.

## Revendications

1. Valve à commande électromagnétique pulsée, comprenant un corps (1) délimitant une chambre (24) dans laquelle un noyau mobile (20) formant obturateur peut être déplacé sous l'action d'un champ magnétique produit par un enroulement électrique (7), cet organe obturateur coopérant avec au moins un siège (15, 16) pour contrôler le passage d'un fluide entre ladite chambre (24) et un orifice de raccordement (2, 5), ledit siège étant constitué par une rondelle (15, 16) non-magnétique, la valve étant caractérisée en ce que la rondelle non-magnétique (15, 16) a une dureté supérieure à celle d'un support (19, 4) contre lequel elle est appliquée axialement par un épaulement (13, 14) d'un élément (11, 12) soumis à l'action d'un ressort (17) et dont une extrémité est engagée dans un trou (2, 5) correspondant d'une partie fixe de la valve.

2. Valve selon la revendication 1, caractérisée en ce que la partie fixe dans laquelle est engagée l'extrémité (18) d'un seul élément (11) est une pièce de passage (2) du fluide, ledit élément présentant lui-même un passage (25) assurant la communication entre le passage de cette pièce (2) et un espace intérieur de l'obturateur mobile.

3. Valve selon la revendication 1 ou 2, caractérisée en ce que le noyau mobile (20) est monté coulissant sur ledit élément (11) qui assure son guidage.

4. Valve selon l'une des revendications 1 à 3, caractérisée en ce que la valve comprend deux sièges (15, 16) disposés l'un en face de l'autre et deux éléments (11, 12) soumis à l'action d'un ressort (17) qui sont télescopiques et coulissent l'un dans l'autre.

5. Valve selon la revendication 4, caractérisée en ce que chacun des deux éléments (11, 12) est engagé par son extrémité dans un trou de parties fixes de la valve, chacun de ces deux éléments télescopiques présentant une cavité intérieure s'ouvrant en regard de l'autre et abritant le ressort (17).

6. Valve selon la revendication 4, caractérisée en ce que le support (4) de l'une des rondelles (16) est constitué par une pièce déplaçable (4) dont la position peut être réglée de façon à ajuster à la valeur désirée la distance entre les deux sièges.

## Claims

1. Electromagnetic pulse-operated valve comprising a body (1) defining a chamber (24) inside which a movable core (20) forming an obturator may be displaced by the action of a magnetic field produced by an electrical winding (7), this obturator member cooperating with at least one seat (15, 16) so as to control the flow of a fluid between the said chamber (24) and a connection orifice (2, 5), the said seat consisting of a non-magnetic washer (15, 16), the valve being characterized in that the non-magnetic washer (15, 16) has a hardness greater than that of a support (19, 4) against which it is applied axially by a shoulder (13, 14) of an element (11, 12) which is subjected to the action of a spring (17) and one end of which is engaged inside a corresponding hole (2, 5) of a fixed part of the valve.

2. Valve according to Claim 1, characterized in that the fixed part inside which the end (18) of a single element (11) is engaged is a part (2) allowing the fluid to flow through, the said element itself having a passage (25) ensuring communication between the passage of this part (2) and an internal space of the movable obturator.

3. Valve according to Claim 1 or 2, characterized in that the movable core (20) is slidably mounted on the said element (11) which ensures guiding thereof.

4. Valve according to one of Claims 1 to 3, characterized in that the valve comprises two seats (15, 16) arranged opposite one another and two elements (11, 12), subjected to the action of a spring (17), which are telescopic and slide one inside the other.

5. Valve according to Claim 4, characterized in that each of the two elements (11, 12) is engaged via its end inside a hole in fixed parts of the valve, each of these two telescopic elements having an internal cavity opening out opposite each other and sheltering the spring (17).

6. Valve according to Claim 4, characterized in that the support piece (4) for one of the washers (16) consists of a displaceable part (4), the position of which may be regulated so as to adjust the distance between the two seats to the desired value.

**Patentansprüche**

1. Ventil mit pulsierendem elektromagnetischen Antrieb, mit einem eine Kammer (24) umgebenden Gehäuse (1), in welcher ein einen Verschlusskörper bildender beweglicher Kern (20) unter der Wirkung eines durch eine elektrische Spule (7) erzeugten Magnetfeldes verschoben werden kann, wobei dieser Verschlusskörper mit wenigstens einem Ventilsitz (15, 16) zusammenarbeitet, um den Fluidumsdurchlass zwischen der benannten Kammer (24) und einer Anschlussöffnung (2, 5) zu kontrollieren, wobei der benannte Ventilsitz von einer nichtmagnetischen Scheibe (15, 16) gebildet ist, dadurch gekennzeichnet, dass die nichtmagnetische Scheibe (15, 16) von grösserer Härte ist als die eines Stützkörpers (19, 4), gegen welchen sie axial über eine Schulter (13, 14) eines Elementes (11, 12), angedrückt wird, welches Element der Wirkung einer Feder (17) unterstellt ist und von dem ein Ende in eine entsprechende Bohrung (2, 5) eines festen Teiles des Ventils eingefügt ist.

2. Ventil nach Anspruch 1, dadurch gekennzeichnet, dass das feste Teil, in welchen das Ende (18) des einem Elements (11) eingefügt ist, ein Durchgangsstück (2) für das Fluidum ist, wobei das benannte Element selber einem Durchgang (25) aufweist der die Verbindung zwischen dem Durchgang dieser Stückes (2) und einem Innenraum des beweglichen Verschlusskörpers bildet.

3. Ventil nach Anspruch 1 oder 2, dadurch gekennzeichnet, dass der bewegliche Kern (20) verschiebbar auf dem benannten Element (11) angeordnet ist, welches seine Führung sichert.

4. Ventil nach einem der Ansprüche 1 bis 3, dadurch gekennzeichnet, dass das Ventil zwei sich gegenüberliegend angeordnete Ventilsitze (5, 6) und zwei Elemente (11, 12) aufweist, welche der Wirkung einer Feder (17) unterstellt sind, teleskopisch sind und ineinander gleiten.

5. Ventil nach Anspruch 4, dadurch gekennzeichnet, dass jedes der beiden Elemente (11, 12) mit seinem Ende in eine Bohrung der festen Teile des Ventils eingefügt ist, wobei jedes dieser beiden teleskopischen Elemente einen Innenraum aufweist, der sich zum anderen Element hin öffnet und die Feder (17) enthält.

6. Ventil nach Anspruch 4, dadurch gekennzeichnet, dass der Stützkörper (4) der einen der beiden Scheiben (16) von einem beweglichen Glied (4) gebildet ist, dessen Position so einstellbar ist, dass damit die gewünschte Distanz zwischen den beiden Ventilsitzen erzielbar ist.

FIG.1

FIG.2